# EUROPÄISCHE PATENTSCHRIFT

(11) **EP 3 715 001 B1**
(45) Veröffentlichungstag und Bekanntmachung des Hinweises auf die Patenterteilung: **26.06.2024**
(21) Anmeldenummer: 19177246.6
(22) Anmeldetag: 29.05.2019
(51) Int. Cl.: B21B 45/00

(54) **HEIZUNGSVORRICHTUNG ZUM INDUKTIVEN ERHITZEN EINES FLACHSTAHLSTREIFENS IN EINEM WARMWALZWERK**
HEATING DEVICE FOR INDUCTIVE HEATING OF A FLAT STEEL STRIP IN A HOT ROLLING MILL
DISPOSITIF DE CHAUFFAGE DESTINÉ AU CHAUFFAGE INDUCTIF D'UNE BANDE D'ACIER PLAN DANS UN LAMINOIR À CHAUD

(30) Priorität: 29.03.2019 AT 502732019
(43) Veröffentlichungstag der Anmeldung: 30.09.2020
(73) Patentinhaber: Primetals Technologies Austria GmbH, 4031 Linz (AT)
(72) Erfinder: Lengauer, Thomas, 4616 Weißkirchen a.d. Traun (AT); Linzer, Bernd, 4621 Leombach (AT); Zahedi, Michael, 4502 St. Marien (AT)
(74) Vertreter: Metals@Linz

(56) Entgegenhaltungen:
- EP-A1- 3 025 799
- AT-A4- 507 663
- ANIS ABDURAHMAN ET AL: "Einsatz flexibler Induktionseinheiten zur Produktions- und Qualitätserhöhung in Warmwalzwerken", E LEKTROWARME INTERNATIONAL, 1. Februar 2012 (2012-02-01), Seiten 47-51, XP055467400,

## Beschreibung

Warmwalzwerk mit einer Heizungsvorrichtung zum induktiven Erhitzen eines Flachstahlstreifens in einem Warmwalzwerk.

Die Erfindung betrifft ein Warmwalzwerk mit einer Heizungsvorrichtung und ein Verfahren zum induktiven Erhitzen eines Flachstahlstreifens in einem Warmwalzwerk mittels der Heizungsvorrichtung, wobei die Heizungsvorrichtung zwischen zwei Walzstraßen des Warmwalzwerks angeordnet ist und der Flachstahlstreifen die Heizungsvorrichtung in einer Transportrichtung mit einer Geschwindigkeit durchläuft. Es ist aber auch möglich, die Heizungsvorrichtung vor einer Walzstraße (z.B. der Vorstraße) oder zwischen zwei Gerüsten einer Walzstraße (z.B. der Fertigstraße) anzuordnen.

Ein Flachstahlstreifen (kurz Stahl- oder Vorstreifen) wird in einem Warmwalzwerk typischerweise auf einem Rollgang von einer ersten Walzstraße (auch Vorwalzstraße oder engl. *roughing mill*) zu einer zweiten Walzstraße (auch Fertigwalzstraße oder engl. *finishing mill*) transportiert. Dabei wird der Flachstahlstreifen mit einer Geschwindigkeit in einer Transportrichtung bewegt, die der Längsrichtung des Flachstahlstreifens entspricht. Durch den Kontakt des heißen Flachstahlstreifens mit Luft oxidiert bzw. verzundert der Flachstahlstreifen. Um das Einwalzen von Zunder in das Band zu verhindern, wird der Flachstahlstreifen vor dem Vor- und/oder vor dem Fertigwalzen entzundert, wodurch die Temperatur abgesenkt wird. Um die Wärmeverluste des Flachstahlstreifens durch das Entzundern und den Transport zwischen den beiden Walzstraßen zu kompensieren und das Endwalzen des Flachstahlstreifens im letzten Gerüst der Fertigwalzstraße in einem bestimmten Temperaturbereich (z.B. im austenitischen Bereich) zu ermöglichen, wird der Flachstahlstreifen durch eine, insbesondere induktive, Heizungsvorrichtung, die zwischen den beiden Walzstraßen angeordnet ist, erhitzt.

Beim Aufheizen des Flachstahlstreifens in dem Warmwalzwerk mittels der induktiven Heizungsvorrichtung muss auf den Arbeitspunkt der Heizungsvorrichtung geachtet werden. Dies bedeutet bei induktiven Heizungsvorrichtungen nach dem Stand der Technik, dass die Heizungsvorrichtung entweder für das Erhitzen von dünnen Stahlstreifen, beispielsweise mit einer Dicke zwischen 6 mm und 15 mm, angepasst ist, oder die Heizungsvorrichtung für das Erhitzen von dicken Stahlstreifen, beispielsweise mit einer Dicke größer 15 mm, angepasst ist. Durch die Anpassung der jeweiligen Arbeitspunkte an die vorherrschenden Betriebsbedingungen kann die Heizungsvorrichtung im jeweiligen Dickenbereich die Anforderungen an den Wirkungsgrad und das erforderliche Temperaturprofil, d.h. die Temperaturverteilung über die Breite und vorzugsweise die Dicke des Stahlstreifens, einhalten. Dies hat zur Folge, dass im ersten Fall dicke Stahlstreifen, z.B. mit einer Dicke > 18 mm, nicht angemessen erhitzt werden und im zweiten Fall dünne Stahlstreifen, z.B. mit einer Dicke < 12 mm, nicht angemessen erhitzt werden können. Mit "nicht angemessen" ist gemeint, dass der Wirkungsgrad und/oder das Temperaturprofil der Heizungsvorrichtung schlecht oder nicht akzeptabel ist.

Die Ursache dieses Problems ist, dass verschiedene Dickenbereiche von Stahlstreifen unterschiedliche Heizkonzepte erfordern, bspw. dass die Heizungsvorrichtung im Stahlstreifen ein magnetisches Feld quer oder längs zur Transportrichtung des Stahlstreifens mit einer bestimmten Arbeitsfrequenz erzeugt und das magnetische Feld auf einen bestimmten Dickenbereich abgestimmt ist.

Da das Heizkonzept und die Arbeitsfrequenz (d.h. die Frequenz der Wechselspannung mit der die Heizungsvorrichtung betrieben wird bzw. arbeitet) einer induktiven Heizungsvorrichtung weitgehend durch ihre Struktur festgelegt sind, ist die Flexibilität zur Abdeckung eines großen Dickenbereichs bei Heizungsvorrichtungen nach dem Stand der Technik entweder nicht oder nur sehr begrenzt möglich. Zudem kann die Arbeitsfrequenz einer Induktionsheizung nach dem Stand der Technik nicht oder nur in einem sehr kleinen Bereich verändert werden. Größere Änderungen der Arbeitsfrequenz sind nur nach einem (längeren) Umbau der Heizungsvorrichtung möglich.

Um viele unterschiedliche Endprodukte in einem Warmwalzwerk wie einer Gieß-Walz-Verbundanlage, insbesondere einer Arvedi ESP Anlage, einer CSP Anlage oder einer QSP-DUE Anlage, produzieren zu können, ist es wünschenswert, Stahlstreifen über einen großen Dickenbereich energieeffizient und homogen hinsichtlich des Temperaturprofils aufheizen zu können.

Aus der EP3025799A1 ist eine Heizungsvorrichtung zum induktiven Erhitzen eines Flachstahlstreifens in einem Warmwalzwerk bekannt, wobei die Heizungsvorrichtung zwischen zwei Walzstraßen des Warmwalzwerks angeordnet ist und der Flachstahlstreifen die Heizungsvorrichtung in einer Transportrichtung mit einer Geschwindigkeit durchläuft. Die Heizungsvorrichtung umfasst eine Mehrzahl von entlang der Transportrichtung des Flachstahlstreifens nacheinander angeordneten Querfeld-Modulen und eine Mehrzahl von entlang der Transportrichtung des Flachstahlstreifens nacheinander angeordneten Längsfeld-Modulen, die entlang der Transportrichtung vor oder nach den Querfeld-Modulen angeordnet sind. Zwischen dem Vorgerüst und dem ersten Walzgerüst F1 der Fertigwalzstraße kann ein Längsfeld-Induktor angeordnet werden. Vor der Fertigwalzstraße und/oder zwischen einzelnen Gerüsten der Fertigwalzstraße können Querfeldinduktoren oder weitere Längsfeldinduktoren angeordnet sein.

Die AT507663A4 offenbart eine Heizungsvorrichtung zum induktiven Erhitzen eines Flachstahlstreifens in einem Warmwalzwerk und lehrt, dass es je nach den spezifischen Temperaturanforderungen an das Walzgut möglich ist, die Erwärmung des Walzguts im Induktionsofen entweder ausschließlich mittels mehrerer Induktoren mit Längsfeld- oder Querfelderwärmung oder einer Mischung von Induktoren mit Längsfeld- und Querfelderwärmung durchzuführen.

Der Erfindung liegt die Aufgabe zugrunde, ein verbessertes Warmwalzwerk mit einer Heizungsvorrichtung und ein verbessertes Verfahren zum induktiven Erhitzen eines Flachstahlstreifens anzugeben, der sich in einer Transportrichtung zwischen zwei Walzstraßen eines Warmwalzwerks, insbesondere einer Gieß-Walz-Verbundanlage, mit einer Geschwindigkeit bewegt. Insbesondere soll das Temperaturprofil des Stahlstreifens in Breiten-, bspw. von 900 bis 2100 mm, und Dickenrichtung, bspw. von 6 bis 65 mm, homogener sein, als bei bekannten Heizungsvorrichtungen.

Die Aufgabe wird erfindungsgemäß durch ein Warmwalzwerk mit einer Heizungsvorrichtung mit den Merkmalen des Anspruchs 1 gelöst. Vorteilhafte Ausgestaltungen der Erfindung sind Gegenstand der abhängigen Ansprüche.

Ein erfindungsgemäßes Warmwalzwerk mit einer Heizungsvorrichtung zum induktiven Erhitzen eines Flachstahlstreifens, wobei die Heizungsvorrichtung zwischen zwei Walzstraßen des Warmwalzwerks angeordnet ist und der Flachstahlstreifen die Heizungsvorrichtung in einer Transportrichtung mit einer Geschwindigkeit durchläuft, umfasst:
- eine erste Modulgruppe mit einer Mehrzahl, insbesondere 6 bis 12, von entlang der Transportrichtung des Flachstahlstreifens nacheinander angeordneten Querfeld-Modulen, und
- eine zweite Modulgruppe mit einer Mehrzahl, insbesondere 2 bis 8, von entlang der Transportrichtung des Flachstahlstreifens nacheinander angeordneten Längsfeld-Modulen, wobei die zweite Modulgruppe entlang der Transportrichtung vor oder nach der ersten Modulgruppe angeordnet ist.

Ein Querfeld-Modul umfasst zumindest eine Spule, bevorzugt eine Spule oberhalb des Stahlstreifens und eine Spule unterhalb des Stahlstreifens, wobei die Spule bzw. die Spulen ein Magnetfeld quer zur Transportrichtung, konkret in der Dickenrichtung und somit senkrecht zur Ober- und Unterseite des Flachstahlstreifens, erzeugen und den Stahlstreifen auf diese Weise induktiv erhitzen kann. Ein Querfeld-Modul ist insbesondere zum Erhitzen von dünnem Stahlband geeignet.

Ein Längsfeld-Modul umfasst eine oder mehrere Spulen, die ein Magnetfeld in Längsrichtung, konkret in Transportrichtung und somit parallel zur Ober- und Unterseite des Flachstahlstreifens, erzeugen und den Stahlstreifen auf diese Weise induktiv erhitzen kann. Ein Längsfeld-Modul ist insbesondere zum Erhitzen von dickerem Stahlband geeignet.

Durch die Kombination von jeweils mehreren Querfeld- und Längsfeld-Modulen können sowohl dünne als auch dicke Stahlstreifen mit hohem Wirkungsgrad und homogenem Temperaturprofil in der Breitenrichtung des Stahlstreifens induktiv erhitzt werden.

Die Heizungsvorrichtung umfasst eine Stromversorgung zum Versorgen zumindest eines Querfeld-Moduls oder eines Längsfeld-Moduls mit einer Wechselspannung, wobei die Stromversorgung einen Umrichter und eine elektrisch verbundene Kondensatorbank mit mehreren parallel geschalteten Kondensatoren aufweist.

Die Induktivitäten der Spulen eines oder mehrerer Querfeld-Module oder Längsfeld-Module bilden mit den Kapazitäten der Kondensatorbank einen sog. LC-Schwingkreis aus.

Die Stromversorgung umfasst einen Frequenzeingang zur Vorgabe einer Soll-Frequenz, wobei die Frequenz der Wechselspannung der Soll-Frequenz folgt. Insbesondere ist die Frequenz während eines Heizvorgangs veränderbar.

Durch das Verändern, z.B. das Hinzuschalten oder Wegschalten von Kondensatoren, der Kapazität der Kondensatorbank und das Ändern der Frequenz der durch den Umrichter erzeugten Wechselspannung kann die Frequenz der Wechselspannung verändert werden. Der Frequenzeingang kann z.B. ein analoger oder digitaler Eingang sein oder auch nur ein einfacher Schalter zum Verändern der Kapazität der Kondensatorbank. Das Verändern der Frequenz erfolgt typischerweise stufenförmig.

Beispielsweise kann die Frequenz in Abhängigkeit der Dicke des Flachstahlstreifens oder anderer Parameter eingestellt werden; das Einstellen kann insbesondere gesteuert oder geregelt erfolgen. Die Dicke des Flachstahlstreifens kann entweder gemessen oder aus einem Stichplan der vorgelagerten Walzstraße übernommen werden. Über die Frequenz kann gezielt die Durcherwärmung des Stahlstreifens beeinflusst werden, wobei höhere Frequenzen eher nur oberflächennahe Bereiche erwärmen und tiefere Frequenzen eine relativ gleichmäßige Erwärmung aller Dickenbereiche bewirken.

Querfeld-Module werden erfindungsgemäß mit einer Wechselspannung mit einer Frequenz zwischen 200 und 1500 Hz betrieben. Auch Längsfeld-Module werden mit einer Wechselspannung betrieben, allerdings zwischen 3000 und 8000 Hz, bei besonders dünnen Bändern sogar bis 40 kHz.

In einer Ausführungsform ist die Frequenz der Wechselspannung während des Betriebs der Heizungsvorrichtung bzw. während eines Heizvorgangs veränderbar, z.B. umschaltbar. Alternativ dazu kann die Frequenz während eines Anlagenstillstands, d.h. vor oder nach einem Heizvorgang, umgeschaltet werden.

Der Frequenzeingang ist typischerweise mit einer Anlagensteuerung des Warmwalzwerks oder einer Steuer- oder Regeleinrichtung verbunden.

Es ist vorteilhaft, wenn die Stromversorgung zumindest eines Querfeld-Moduls oder eines Längsfeld-Moduls einen Stromeingang zur Vorgabe einer Soll-Stromstärke umfasst, wobei die Stromstärke der Wechselspannung der Soll-Stromstärke folgt. Der Stromeingang ist typischerweise ein analoger (z.B. ein sog. 4 bis 20 mA) oder ein digitaler Eingang. Das Verändern der Stromstärke erfolgt meistens kontinuierlich oder quasikontinuierlich, z.B. einem 6- (64 Stufen), 8- (256 Stufen) oder 10-Bit Signal folgend, durch ein Stromstellglied, z.B. einen Stromregler.

Es ist vorteilhaft, wenn die Stromversorgung zumindest eines Querfeld-Moduls oder eines Längsfeld-Moduls einen Spannungseingang zur Vorgabe einer Soll-Spannungsamplitude umfasst, wobei die Spannungsamplitude der Wechselspannung der Soll-Spannungsamplitude folgt. Der Spannungseingang kann wiederum ein analoger (z.B. ein sog. 4 bis 20 mA) oder ein digitaler Eingang sein.

Es ist vorteilhaft, wenn die Heizungsvorrichtung einen Schub-Aktuator zum Verändern der Breitenposition zumindest einer Spule eines Querfeld-Moduls in der Breitenrichtung des Flachstahlstreifens umfasst. Besonders bevorzugt ist es, wenn ein erster Schub-Aktuator zumindest eine Spule auf der Oberseite des Stahlstreifens und ein zweiter Schub-Aktuator zumindest eine Spule auf der Unterseite des Stahlstreifens verfahren kann. Dadurch kann das Querfeld-Modul unterschiedliche Breiten von Stahlstreifen gleichmäßig erwärmen und ein übermäßiges Erhitzen der Kantenbereiche wird vermieden.

Bevorzugt ist, wenn zumindest ein Querfeld-Modul einen Breiteneingang zur Vorgabe einer Soll-Breitenposition umfasst und die Breitenposition einer Spule des Querfeld-Moduls in Breitenrichtung der Soll-Breitenposition folgt. Die Umsetzung der Soll-Breitenposition auf die Breitenposition erfolgt z.B. durch einen Positionsregler.

Es ist vorteilhaft, wenn die Heizungsvorrichtung zumindest einen Hub-Aktuator zum Verändern der Höhenposition zumindest einer Spule eines Querfeld-Moduls in der Höhenrichtung quer aufweist. Besonders bevorzugt ist es, wenn ein erster Hub-Aktuator zumindest eine Spule auf der Oberseite des Stahlstreifens und ein zweiter Hub-Aktuator zumindest eine Spule auf der Unterseite des Stahlstreifens relativ zum Flachstahlstreifen anheben bzw. absenken kann. Dadurch kann der sog. Koppelspalt zwischen der Spule bzw. den Spulen und den Flachstahlstreifen auch bei unterschiedlichen Dicken konstant gehalten werden, wodurch der Wirkungsgrad der Heizungsvorrichtung erhöht wird. Außerdem kann die Spule bzw. können die Spulen bei einer Störung im Warmwalzwerk vom Stahlstreifen entfernt werden, wodurch die Wartbarkeit verbessert wird.

Bevorzugt ist, wenn zumindest ein Querfeld-Modul einen Höheneingang zur Vorgabe einer Soll-Höhenposition umfasst und die Höhenposition einer Spule des Querfeld-Moduls in Dickenrichtung der Soll-Höhenposition folgt. Die Umsetzung der Soll-Höhenposition auf die Höhenposition erfolgt z.B. durch einen Positionsregler.

Die Schub- oder Hub-Aktuatoren können bspw. hydraulische, pneumatische oder elektromechanische Aktuatoren sein.

Ein Breiten- bzw. Höheneingang kann wiederum ein analoger (z.B. 4-20 mA) oder digitaler Eingang sein.

Vorzugsweise umfasst die Heizungsvorrichtung eine Steuer- oder Regeleinrichtung) mit
- einem Stromausgang zur Vorgabe einer Soll-Stromstärke eines Querfeld-Moduls und/oder einem Frequenzausgang zur Vorgabe einer Soll-Frequenz eines Querfeld-Moduls,
- einem Breitenausgang zur Vorgabe einer Breiten-Position s_{B} einer Spule eines Querfeld-Moduls in der Breitenrichtung und/oder einem Höhenausgang zur Vorgabe einer Höhen-Position s_{H} einer Spule eines Querfeld-Moduls in der Dickenrichtung,
wobei die Soll-Stromstärke, die Soll-Frequenz, die Breiten-Position s_{B} und die Höhen-Position s_{H} in Abhängigkeit wenigstens eines Parameters des Flachstahlstreifens aus der Gruppe der Dicke, der Breite, der Geschwindigkeit, der Temperatur vor dem Eintritt in die Heizungsvorrichtung, und der Temperatur nach dem Austritt aus der Heizungsvorrichtung eingestellt wird.

Natürlich ist es möglich, dass die Steuer- bzw. Regeleinrichtung aus mehreren Modulen bzw. Einheiten besteht, bspw. einer ersten Einheit zur Vorgabe der Soll-Frequenz und/oder der Soll-Stromstärke und einer zweiten Einheit zur Vorgabe der Breiten-Position und/oder der Höhen-Position zumindest einer Spule. In diesem Fall werden beide Einheiten in Abhängigkeit zumindest eines Parameters des Flachstahlstreifens aus der Gruppe der Dicke, der Breite, der Geschwindigkeit, der Temperatur vor dem Eintritt in die Heizungsvorrichtung, und der Temperatur nach dem Austritt aus der Heizungsvorrichtung eingestellt. Eine Steuer- bzw. Regeleinrichtung kann ein oder mehrere Querfeld-Module ansteuern. Außerdem ist es möglich, dass eine Steuer- bzw. Regeleinrichtung die Stromstärke und ggf. die Stromstärke eines oder mehrerer Längsfeld-Module in Abhängigkeit zumindest eines der vorgenannten Parameter einstellen.

Durch die Steuer- oder Regeleinrichtung kann die Heizungsvorrichtung Stahlstreifen unterschiedlicher Dicke, Breite, Geschwindigkeit und mit unterschiedlichen Temperaturen optimal bzgl. des Wirkungsgrades und des Temperaturprofils erhitzen.

Die technische Aufgabe wird ebenfalls durch ein Verfahren nach Anspruch 8 gelöst. Vorteilhafte Ausgestaltungen der Erfindung sind Gegenstand der abhängigen Ansprüche.

Gemäß Anspruch 8 wird ein Flachstahlstreifen mittels der erfindungsgemäßen Heizungsvorrichtung induktiv erhitzt, wobei die Heizungsvorrichtung zwischen zwei Walzstraßen eines Warmwalzwerks angeordnet ist und der Flachstahlstreifen die Heizungsvorrichtung in einer Transportrichtung mit einer Geschwindigkeit durchläuft. Dabei wird der Flachstahlstreifen durch eine erste Modulgruppe mit einer Mehrzahl, insbesondere 6-12, von entlang der Transportrichtung nacheinander angeordneten Querfeld-Modulen und durch eine zweite Modulgruppe mit einer Mehrzahl, insbesondere 2 bis 8, von entlang der Transportrichtung des Flachstahlstreifens nacheinander angeordneten Längsfeld-Modulen erhitzt, wobei die zweite Modulgruppe entlang der Transportrichtung vor oder nach der ersten Modulgruppe angeordnet ist.

Zumindest ein Querfeld-Modul wird mit einer Wechselspannung mit einer Frequenz betrieben, wobei die Frequenz während einer Walzkampagne oder zwischen zwei Walzkampagnen verändert wird. Die Frequenz wird vorzugsweise in Abhängigkeit der Dicke des Flachstahlstreifens eingestellt. Natürlich können auch weitere Parameter zur Einstellung der Frequenz herangezogen werden.

Die Frequenz wird während des Betriebs der Heizungsvorrichtung, d.h. während einer Walzkampagne, umgeschaltet oder variabel verändert werden. Alternativ kann die Frequenz auch vor oder nach einem Heizvorgang, d.h. zwischen zwei Walzkampagnen, verändert werden.

Gemäß einer Ausführungsform wird zumindest ein Querfeld-Modul mit einer Stromstärke betrieben und die Stromstärke in Abhängigkeit wenigstens eines Parameters des Flachstahlstreifens aus der Gruppe der Dicke, der Geschwindigkeit, der Temperatur vor dem Eintritt in die Heizungsvorrichtung, und der Temperatur nach dem Austritt aus der Heizungsvorrichtung eingestellt wird.

Gemäß einer weiteren Ausführungsform wird zumindest eine Spule eines Querfeld-Moduls in der Breitenrichtung die Breiten-Position der Spule in Abhängigkeit der Breite und/oder eines Temperaturprofils des Flachstahlstreifens eingestellt. Das Temperaturprofil des Flachstahlstreifens kann durch eine Temperaturmessung an mehreren Positionen in der Breitenrichtung des Stahlstreifens entweder vor dem Eintritt in die der Heizungsvorrichtung oder vor dem Eintritt in eine nachgelagerte Walzstraße gemessen werden. Insbesondere kann das Temperaturprofil z.B. vor dem Entzundern oder bevorzugt auch nach dem Entzundern gemessen werden.

Gemäß einer weiteren Ausführungsform wird zumindest eine Spule eines Querfeld-Moduls in der Dickenrichtung die Höhen-Position s_{H} der Spule in Abhängigkeit der Dicke des Flachstahlstreifens eingestellt. Dadurch kann der sog. Koppelspalt zwischen dem Werkstück und der Spule bei unterschiedlichen Dicken des Werkstücks eingestellt werden und z.B. konstant gehalten werden.

Die beschriebenen Ausführungsformen kombinieren verschiedene induktive Heizkonzepte, beispielsweise Querfeld-Module und Längsfeld-Module mit verschiedenen, insbesondere schaltbaren oder variabel einstellbaren, Arbeitsfrequenzen, so dass ein weiter Dickenbereich der zu erhitzenden Flachstahlstreifen abgedeckt werden kann. Die Leistungsverteilung entlang der Heizungsvorrichtung und die Arbeitsfrequenzen der individuellen Querfeld-Module und Längsfeld-Module kann über die Einstellung der Stromstärke entsprechend der tatsächlichen Dicke des Flachstahlstreifens gewählt werden. Das bedeutet beispielsweise, dass für bestimmte Dicken ausschließlich oder überwiegend mit Längsfeld-Modulen geheizt wird und mit Querfeld-Modulen bei bestimmten Frequenzen lediglich unterstützt wird. Für andere Dicken der Flachstahlstreifen kann es umgekehrt sein.

Es können verschiedene Frequenzen oder Sets von Frequenzen wählbar sein. Das Schalten oder variable Ändern der Frequenzen kann entweder online oder offline erfolgen, um die Heizeffizienz und das Temperaturprofil zu optimieren. Die Leistungsverteilung entlang der Heizungsvorrichtung kann ebenfalls gewählt werden, um die Heizeffizienz und das Temperaturprofil zu optimieren. Unterschiedliche Leistungsverteilung und unterschiedliche Arbeitsfrequenzen entlang der Heizungsvorrichtung können gewählt werden, um Materialeigenschaften eines aus dem Flachstahlstreifen erhaltenen Endprodukts zu beeinflussen.

Durch die Kombination verschiedener Heizkonzepte mit schaltbaren oder variabel änderbaren Arbeitsfrequenzen kann der Produktbereich einer Walzanlage erheblich erweitert werden. Durch die Verwendung verschiedener Schaltmuster (mehr oder weniger Leistung an Querfeld-Modulen und Längsfeld-Modulen) bei einer bestimmten Arbeitsfrequenz kann die Heizeffizienz signifikant verbessert werden und die Temperaturverteilung über die Dicke des Flachstahlstreifens beeinflusst werden. Dabei ist eine Energieersparnis von bis zu 50 % möglich.

Die Breite des Flachstahlstreifens kann beispielsweise von 900 mm bis 2100 mm, die Dicke beispielsweise von 6 mm bis 65 mm, insbesondere von 8 mm bis 45 mm betragen. Der Massenfluss durch die Heizungsvorrichtung kann beispielsweise von 200 t/h bis 500 t/h betragen. Die beschriebene Heizungsvorrichtung kann auf Änderungen der Dicke des Flachstahlstreifens und des Massenflusses angepasst werden. Durch optimiertes Aufheizen des Anfangs und des Endes des Flachstahlstreifens ergibt sich eine hohe Produktivität im Endlosbetrieb, aber auch im Batch- oder Semi-Endlosbetrieb. Mittels der beschriebenen Vorrichtung bzw. des Verfahrens ist eine homogene Erhitzung des Flachstahlstreifens in Richtung der Breite und der Dicke erzielbar. Es kann eine besonders geringe Länge der Heizungsvorrichtung mit hoher Leistungsdichte und verminderten Wärmeverlusten erzielt werden, auch bei geringem Massenstrom. Durch die reduzierte Anzahl der induktiven Module und die geringe mechanische Komplexität können Kosten reduziert werden.

Die Anordnung von Querfeld-Modulen und Längsfeld-Modulen jeweils in Gruppen anstatt alternierend erlaubt eine einfachere Regelung der gesamten Heizungsvorrichtung. Jeder Typ von induktiven Modulen oder Modulgruppen, beispielsweise Querfeld-Module, Längsfeld-Module oder Module mit unterschiedlichen Frequenzen, hat ein typisches Erhitzungsverhalten, sodass jeweils unterschiedliche Temperaturprofile erzeugt werden. Für die Regelung ist es einfacher, wenn eine erste Modulgruppe ein bestimmtes Temperaturprofil erzeugt, beispielsweise mittels Längsfeld-Modulen, die die Temperatur entlang der Flachstahlstreifenbreite gleichmäßig anheben, und anschließend mit Hilfe einer zweiten Modulgruppe, beispielsweise durch die Querfeld-Module, das erzeugte Temperaturprofil entsprechend den Anforderungen geändert und optimiert wird.

Alternativ können auch andere Reihenfolgen verwendet werden. Beispielsweise kann das Temperaturprofil zuerst durch Querfeld-Module voreingestellt werden und anschließend durch Längsfeld-Module eine Temperaturhomogenisierung erzielt werden.

Querfeldinduktoren können üblicherweise mit kleineren Frequenzen betrieben werden, da sich durch die spezifische Ausbildung der magnetischen Felder die Wärme besser in das Material einbringen lässt. Übliche Arbeitsbereiche liegen dabei bei etwa 200 Hz bis 1500 Hz.

Bei Verwendung ausschließlich von Querfeld-Modulen steigt bei dünner werdenden Bändern der Wirkungsgrad stark an (ca. 60% bei 18 mm bis ca. 80% bei 8 mm). Bei dünnsten Bändern ist eine fast homogene Temperaturverteilung entlang der Bandbreite gegeben mit geringen Temperaturabweichungen an den Kanten. Bei steigender Banddicke steigen auch die Temperaturabweichungen an den Kanten und nehmen ab ca. 14 mm bis 15 mm höhere Werte an. Ab ca. 20 mm bis 25 mm führt das zu einer Kantenüberhitzung, was für sich negativ auf die Produktqualität auswirken kann. Die Banddurcherhitzung reicht bis in den Kern, da geringe Betriebsfrequenzen verwendet werden können. Aufgrund der geringen Betriebsfrequenzen ist ein einfacherer Aufbau der Spannungsversorgung möglich.

Bei Längsfeldinduktoren nimmt der Wärmeeintrag und der Wirkungsgrad bei dünner werdenden Bändern drastisch ab. Abhilfe schafft dabei eine Erhöhung der Frequenz. Ist beispielsweise für Dicken größer 15 mm ein Frequenzbereich von 3000 Hz bis 8000 Hz ausreichend, so sind für dünne Banddicken bis ca. 10 mm Frequenzen von 10 kHz bis 15 kHz vorteilhaft, um einen effizienten Betrieb zu ermöglichen.

Sinkt die Banddicke weiter ab, so können die Frequenzen auch Werte bis zu 40 kHz erreichen.

Bei ausschließlicher Verwendung von Längsfeld-Modulen sinkt bei dünner werdenden Bändern der Wirkungsgrad (ca. 70% bei 18 mm bis ca. 40% bei 8 mm). Es wären also ein größerer Ofen und höhere Investitionskosten bei gleicher Produktionsmenge erforderlich. Bei allen Banddicken ist immer eine fast homogene Temperaturverteilung gegeben. Dadurch wird das Temperatur-Einlaufprofil des Erhitzers "nur" gleichmäßig angehoben. Somit bleiben kalte Kanten im Einlauf auch nach der Erhitzung kälter.

Soll ein größerer Dickenbereich abgedeckt werden, so kann auch eine Kombination von Induktionsmodulen verwendet werden, die jeweils auf eine feste Arbeitsfrequenz abgestimmt und ausgelegt sind.

Alternativ können in diesem Fall auch Induktionsmodule eingesetzt werden, die abhängig von den aktuellen Produktionsparametern auf die erforderliche optimale Arbeitsfrequenz umgeschaltet bzw. variiert werden können.

Die vorliegende Erfindung erlaubt es, durch eine Kombination aus gruppierten Längsfeld-Modulen und Querfeld-Modulen für alle Typen von Endlosstreifen-Produktionsanlagen (ESP) einen optimalen Erhitzer mit hohem Wirkungsgrad und optimierter Temperaturverteilung zu konfigurieren.

Beispielhaft sollen hier folgende Typen von Heizungsvorrichtungen für ESP-Produktionsanlagen genannt werden:
- Zwischenbanddicke zwischen 6 mm und 17 mm: ca. 80 bis 90% des produzierten Zwischenbands weist eine Dicke zwischen 6 und 12 mm auf, der Rest der Produktion eine Dicke zwischen 12 mm und 17 mm. Die Heizungsvorrichtung kann dabei beispielsweise 8 bis 10 Querfeld-Module umfassen. Optional können noch zwei Längsfeld-Module zur Optimierung des Temperatur-Profils eingesetzt werden.
- Zwischenbanddicke zwischen 6 mm und 20 mm: der gesamte Dickenbereich wird bei der Produktion genutzt. Die Heizungsvorrichtung kann dabei beispielsweise 8 bis 10 Querfeld-Module und zwei bis vier Längsfeld-Module umfassen. Hierdurch ergibt sich ein guter Wirkungsgrad der Querfeld-Module bei dünnen Bändern und ein homogenes Temperaturprofil infolge gleichmäßiger Erhitzung durch die Längsfeld-Module.
- Zwischenbanddicke von 6 mm oder 8 mm bis 45 mm oder 50 mm: Die Heizungsvorrichtung kann dabei beispielsweise 8 bis 10 Querfeld-Module und 6 bis 8 Längsfeld-Module umfassen. Bei einem dicken Zwischenband wird die Energie größtenteils durch die Längsfeld-Module eingebracht. Dies ist bei dicken Bändern vorteilhaft. Die Querfeld-Module dienen hauptsächlich dazu, die Eckbereiche und den Kern des Zwischenbands zu erhitzen und dadurch das Temperaturprofil in Breiten- und Dickenrichtung des Zwischenbands zu homogenisieren. Bei einem dünnen Zwischenband wird die Energie größtenteils durch die Querfeld-Module eingebracht. Dies ist bei dünnen Bändern vorteilhaft. Die Längsfeld-Module sind entweder abgeschaltet oder bringen nur wenig Energie in das Zwischenband ein.

Ein Zwischenband ist ein Flachstahlstreifen bzw. -band, der in einer ersten Walzstraße (Vorwalzstraße) des Warmwalzwerks gewalzt wurde, aber noch nicht in einer zweiten Walzstraße (Fertigwalzstraße) fertig gewalzt wurde.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine schematische Draufsicht auf eine erste, nicht erfindungsgemäße Ausführungsform einer Heizungsvorrichtung zum Erhitzen eines Flachstahlstreifens,
- FIG 2: eine schematische Draufsicht auf eine zweite, nicht erfindungsgemäße Ausführungsform einer Heizungsvorrichtung zum Erhitzen eines Flachstahlstreifens,
- FIG 3: eine schematische Draufsicht auf eine erste erfindungsgemäße Ausführungsform einer Heizungsvorrichtung zum Erhitzen eines Flachstahlstreifens,
- FIG 4: eine schematische Draufsicht auf eine zweite erfindungsgemäße Ausführungsform einer Heizungsvorrichtung zum Erhitzen eines Flachstahlstreifens,
- FIG 5a: eine schematische Darstellung eines Querfeld-Moduls zum Erhitzen eines Flachstahlstreifens,
- FIG 5b: eine schematische Darstellung der Bestromung und des Magnetfelds eines Querfeld-Moduls zum Erhitzen eines Flachstahlstreifens,
- FIG 6a: eine schematische Darstellung eines Längsfeld-Moduls zum Erhitzen eines Flachstahlstreifens,
- FIG 6b: eine schematische Darstellung der Bestromung und des Magnetfelds eines Längsfeld-Moduls zum Erhitzen eines Flachstahlstreifens,
- FIG 7a: eine Vorderansicht auf eine dritte erfindungsgemäße Ausführungsform einer Heizungsvorrichtung,
- FIG 7b: eine Draufsicht auf die Heizungsvorrichtung von FIG 7a,
- FIG 7c: eine teilweise geschnittene Darstellung entlang der Linie A-A von FIG 7b,
- FIG 8: eine schematische Darstellung einer Steuer- oder Regeleinrichtung für die Heizungsvorrichtung der FIG 7a - FIG 7c.

Einander entsprechende Teile sind in allen Figuren mit den gleichen Bezugszeichen versehen.

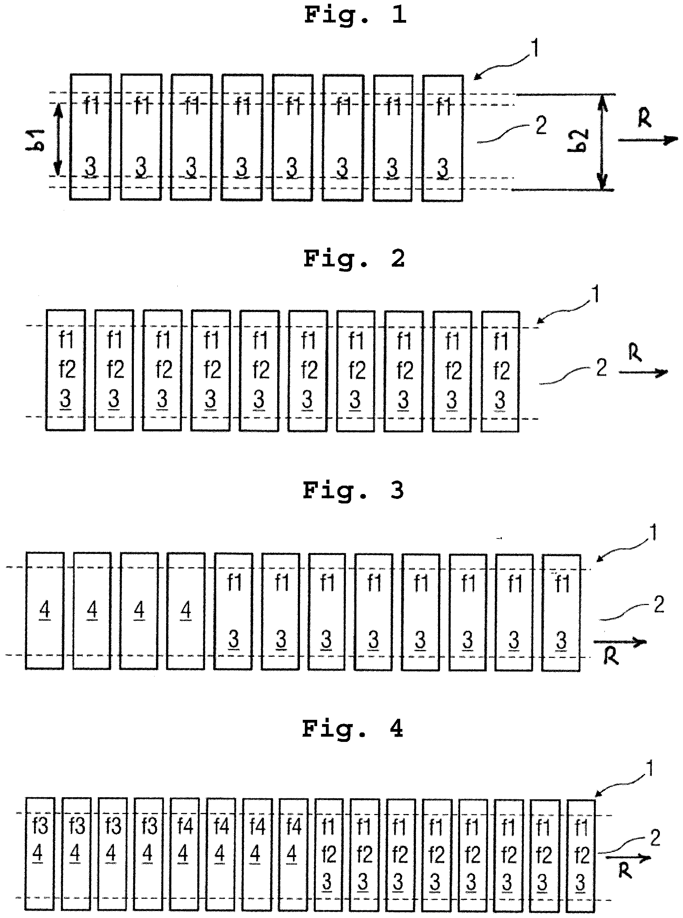

**Figur 1** zeigt eine schematische Ansicht einer ersten, nicht erfindungsgemäßen Ausführungsform einer Heizungsvorrichtung 1 zum induktiven Erhitzen eines Flachstahlstreifens 2. Der Flachbandstreifen tritt aus einer nicht dargestellten Vorwalzstraße aus, wird mittels der Heizungsvorrichtung 1 erhitzt und tritt nach dem Erhitzen in eine nicht dargestellte Fertigwalzstraße ein. Optional kann der erhitzte Flachstahlstreifes 2 vor dem Eintritt in die Fertigwalzstraße noch entzundert werden. Die Heizungsvorrichtung 1 umfasst acht Querfeld-Modulen 3. Ein Querfeld-Modul 3 umfasst je einen Induktor oberhalb und unterhalb des Flachstahlstreifens 2, welche ein Magnetfeld quer zur Transportrichtung R, konkret in der Dickenrichtung und somit senkrecht zur Ober- und Unterseite des Flachstahlstreifens 2, erzeugen und diesen auf diese Weise induktiv erhitzen. In der gezeigten Ausführungsform sind acht nacheinander angeordnete Querfeld-Module 3 vorgesehen.

Es kann jedoch auch eine größere oder kleinere Anzahl von Querfeld-Modulen 3 vorgesehen sein. Die Querfeld-Module 3 werden mit Wechselspannung einer ersten Frequenz f1 betrieben. Die Heizungsvorrichtung 1 eignet sich beispielsweise zum Erhitzen von Flachstahlstreifen mit Dicken von 6 mm bis 17 mm. Der Flachstahlstreifen 2 kann unterschiedliche Breiten b1, b2 annehmen. Um eine Überhitzung der Kantenbereiche des Flachstahlstreifens 2 zu verhindern, können die Induktoren der Querfeld-Modul 3 relativ zu einer Kante, z.B. der oberhalb des Streifens angeordnete obere Induktor relativ zur oben dargestellten Kante und der unterhalb des Streifens angeordnete untere Induktor relativ zur unten dargestellten Kante durch je einen Aktuator verfahren werden.

**Figur 2** zeigt eine schematische Ansicht einer zweiten, nicht erfindungsgemäßen Ausführungsform einer Heizungsvorrichtung 1 zum induktiven Erhitzen eines Flachstahlstreifens 2, insbesondere zum Erhitzen zwischen zwei Walzstraßen eines Warmwalzwerks. Die Heizungsvorrichtung 1 umfasst zehn Querfeld-Module 3. Ein Querfeld-Modul 3 umfasst wiederum je einen Induktor oberhalb und unterhalb des Flachstahlstreifens 2, die ein Magnetfeld quer zur Transportrichtung R, konkret in der Dickenrichtung und somit senkrecht zur Ober- und Unterseite des Flachstahlstreifens 2, erzeugen und diesen auf diese Weise induktiv erhitzen. In der gezeigten Ausführungsform sind zehn nacheinander angeordnete Querfeld-Module 3 vorgesehen.

Es kann jedoch auch eine größere oder kleinere Anzahl von Querfeld-Modulen 3 vorgesehen sein. Die Querfeld-Module 3 werden mit Wechselspannung mit einer umschaltbaren Frequenz betrieben, wobei die Frequenz den Wert f1 oder den Wert f2 annehmen kann, wobei f2 größer als f1 ist. Die Heizungsvorrichtung 1 eignet sich beispielsweise zum Erhitzen von Flachstahlstreifen mit Dicken von 6 mm bis 15 mm, jedoch mit einer zusätzlichen Einstellmöglichkeit für das Temperaturprofil.

**Figur 3** zeigt eine schematische Ansicht einer ersten erfindungsgemäßen Ausführungsform einer Heizungsvorrichtung 1 zum induktiven Erhitzen eines Flachstahlstreifens 2, insbesondere zwischen zwei Walzstraßen eines Warmwalzwerks. Die Heizungsvorrichtung 1 umfasst eine Anzahl von nacheinander angeordneten Querfeld-Modulen 3 und Längsfeld-Modulen 4. Ein Querfeld-Modul 3 umfasst ein oder mehrere Induktoren, die ein Magnetfeld quer zur Transportrichtung R, konkret in der Dickenrichtung und somit senkrecht zur Ober- und Unterseite des Flachstahlstreifens 2, erzeugen und diesen auf diese Weise induktiv erhitzen. In der gezeigten Ausführungsform sind acht nacheinander angeordnete Querfeld-Module 3 vorgesehen. Es kann jedoch auch eine größere oder kleinere Anzahl von Querfeld-Modulen 3 vorgesehen sein. Ein Längsfeld-Modul 4 umfasst ein oder mehrere Induktoren, die ein Magnetfeld in Längsrichtung, konkret in Transportrichtung R und somit parallel zur Ober- und Unterseite des Flachstahlstreifens 2, erzeugen und dieses auf diese Weise induktiv erhitzen. In der gezeigten Ausführungsform sind vier nacheinander angeordnete Längsfeld-Module 4 vorgesehen. Es kann jedoch auch eine größere oder kleinere Anzahl Längsfeld-Module 4 vorgesehen sein. Die Querfeld-Module 3 werden mit Wechselspannung einer ersten Frequenz f1 betrieben. Die Heizungsvorrichtung 1 eignet sich beispielsweise zum Erhitzen von Flachstahlstreifen mit Dicken von 6 mm bis 20 mm.

**Figur 4** zeigt eine schematische Ansicht einer zweiten erfindungsgemäßen Ausführungsform einer Heizungsvorrichtung 1 zum induktiven Erhitzen eines Flachstahlstreifens 2, insbesondere zum Erhitzen zwischen zwei Walzstraßen eines Warmwalzwerks. Die Heizungsvorrichtung 1 umfasst eine Anzahl von nacheinander angeordneten Querfeld-Modulen 3 und Längsfeld-Modulen 4. Ein Querfeld-Modul 3 umfasst ein oder mehrere Induktoren, die ein Magnetfeld quer zur Transportrichtung R, konkret in der Dickenrichtung und somit senkrecht zur Ober- und Unterseite des Flachstahlstreifens 2, erzeugen und diesen auf diese Weise induktiv erhitzen. In der gezeigten Ausführungsform sind acht nacheinander angeordnete Querfeld-Module 3 vorgesehen. Es kann jedoch auch eine größere oder kleinere Anzahl Querfeld-Module 3 vorgesehen sein. Ein Längsfeld-Modul 4 umfasst ein oder mehrere Induktoren, die ein Magnetfeld in Längsrichtung, konkret in Transportrichtung R und somit parallel zur Ober- und Unterseite des Flachstahlstreifens 2, erzeugen und dieses auf diese Weise induktiv erhitzen. In der gezeigten Ausführungsform sind acht nacheinander angeordnete Längsfeld-Module 4 vorgesehen. Es kann jedoch auch eine größere oder kleinere Anzahl von Längsfeld-Modulen 4 vorgesehen sein. Die Querfeld-Module 3 werden mit Wechselspannung mit einer umschaltbaren Frequenz betrieben, wobei die Frequenz den Wert f1 oder den Wert f2 annehmen kann, wobei f2 größer als f1 ist. Die Längsfeld-Module 4 werden entweder mit einer Frequenz f3 oder f4 betrieben, wobei f3 > f2 und f4 > f2 ist. Die Heizungsvorrichtung 1 eignet sich beispielsweise zum Erhitzen von Flachstahlstreifen mit Dicken von 6 mm bis 65 mm.

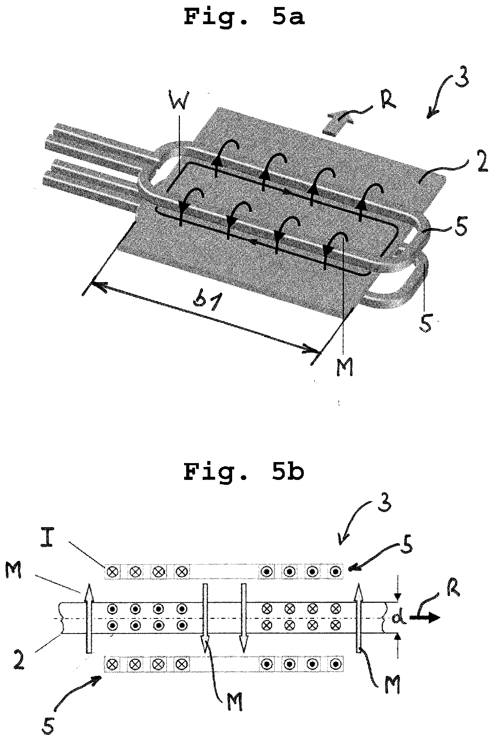

Die **Figur 5a** zeigt schematisch ein Querfeld-Modul 3 mit zwei Spulen 5, die ober- und unterhalb des Flachstahlstreifens 2 angeordnet sind. Durch das Bestromen der Spulen 5 des Querfeld-Moduls 3 bildet sich ein Magnetfeld M quer zur Transportrichtung R in der Dickenrichtung des Streifens 2 aus. Dadurch wird der Flachstahlstreifen 2 mit der Dicke d und der Breite b1 erhitzt. Auf der Ober- und der Unterseite des Streifens 2 bilden sich Wirbelströme W aus.

In **Figur 5b** werden die Bestromung I (in die Zeichenebene hineinlaufende Ströme sind durch ein Kreuz, aus der Zeichenebene herauslaufende Ströme sind durch einen Punkt dargestellt) der Spulen 5 und die magnetischen Flusslinien des Magnetfelds M für ein weiteres Querfeld-Modul 3 dargestellt.

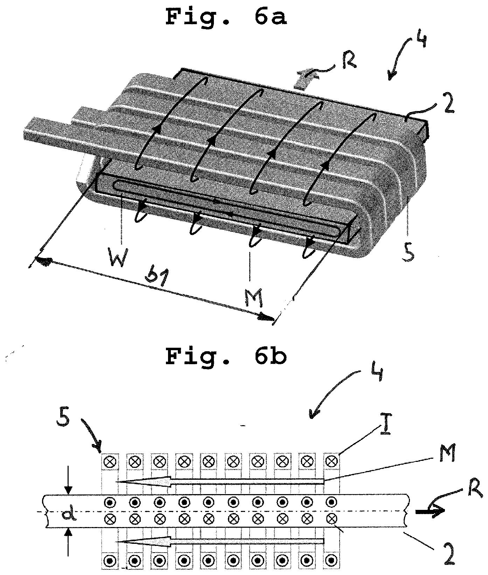

Die **Figur 6a** zeigt schematisch ein Längsfeld-Modul 4 mit einer Spule 5, die den Flachstahlstreifen 2 quer zur Transportrichtung R umschließt. Durch das Bestromen der Spule 5 des Längsfeld-Moduls 4 bildet sich ein Magnetfeld M in Transportrichtung R parallel zur Ober- und Unterseite des Streifens 2 aus. Dadurch wird der Flachstahlstreifen 2 mit der Dicke d und der Breite b1 erhitzt. Parallel zur Ober- und der Unterseite des Streifens 2 bilden sich Wirbelströme W aus.

In **Figur 6b** werden die Bestromung I (in die Zeichenebene hineinlaufende Ströme sind durch ein Kreuz, aus der Zeichenebene herauslaufende Ströme sind durch einen Punkt dargestellt) der Spule 5 und die magnetischen Flusslinien des Magnetfelds M für ein Längsfeld-Modul 4 dargestellt.

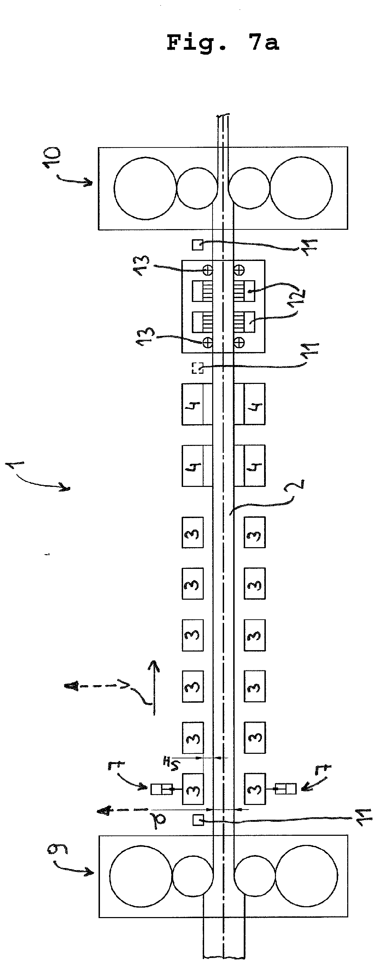

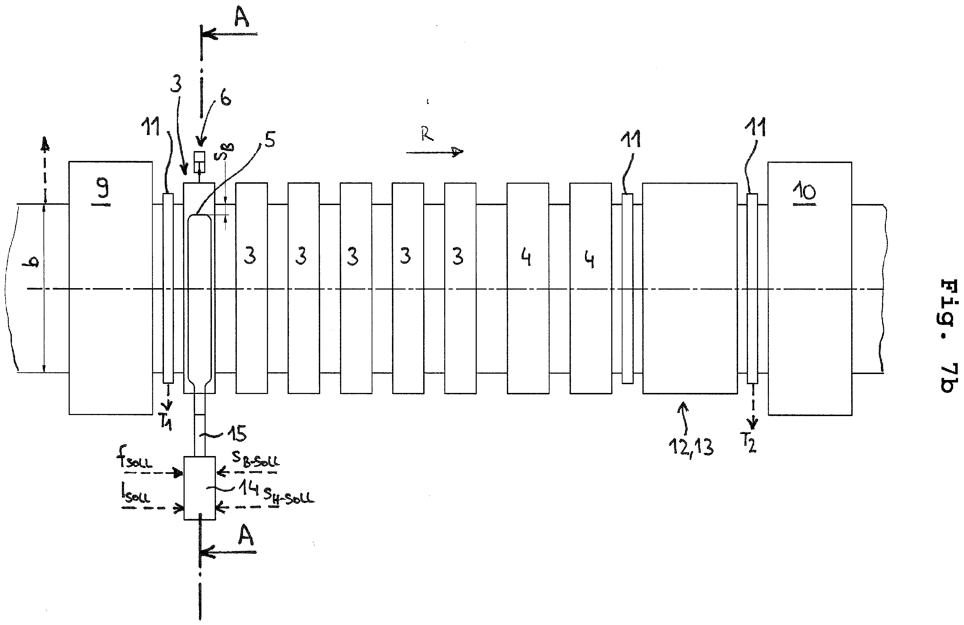

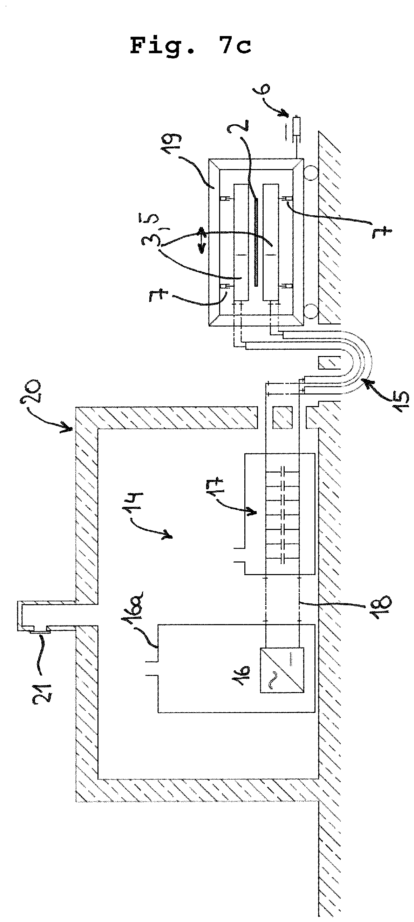

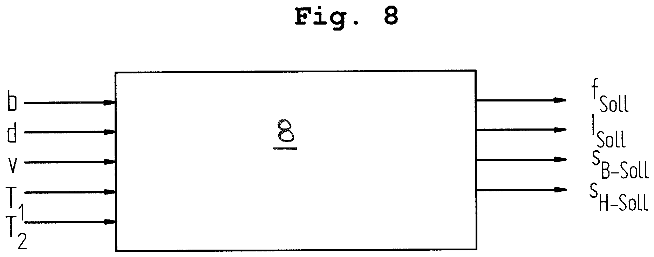

Die **Figuren 7a** **und** **7b** zeigen eine Aufriss- und eine Grundrissdarstellung einer erfindungsgemäßen Heizungsvorrichtung 1 in einem Warmwalzwerk. Nachdem der Flachstahlstreifen 2 im letzten Gerüst 9 einer Vorwalzstraße gewalzt wurde, wird der Vorstreifen 2 auf einem nicht näher dargestellten Rollgang zum ersten Gerüst 10 der Fertigwalzstraße transportiert und dabei durch eine Heizungsvorrichtung 1 induktiv erhitzt. Die Heizungsvorrichtung 1 umfasst sechs Querfeld-Module 3 mit je einer Spule 5 ober- und unterhalb des Vorstreifens 2 sowie zwei Längsfeld-Module 4, wie hinter den Querfeld-Modulen 3 angeordnet sind. Die Breite b, die Dicke d, die Geschwindigkeit v und das Temperaturprofil T₁ des Vorstreifens 2 werden nach dem letzten Gerüst 9 der Vorwalzstraße durch geeignete Messgeräte gemessen und einer Steuer- oder Regeleinrichtung 8 (siehe FIG 8) zugeführt. Nach dem Passieren der Heizungsvorrichtung 1 wird der Vorstreifen 2 durch zwei Entzunderer 12 mit hohem Druck, bspw. 150 bis 400 bar, entzundert. Vor- und nach den Entzunderern 12 ist jeweils ein Paar von Treiberrollen 13 angeordnet um das Austreten von Druckwasser aus dem Entzunderungsbereich zu verhindern. Entweder vor oder bevorzugt nach dem Entzundern wird das Temperaturprofil T₂ des Vorstreifen durch einen Pyrometer 11 gemessen und ebenfalls der Steuer- oder Regeleinrichtung 8 zugeführt. Optional kann ein strichliert dargestellter Pyrometer 11 vor den Entzunderern 12 vorhanden sein, der das Temperaturprofil des Vorstreifens 2 vor dem Entzundern misst. Die Spulen 5 der Querfeld-Module 3 sind jeweils in einem Spulenwagen 19 (siehe auch FIG 7c) untergebracht. Der Spulenwagen 19 samt der Spulen 5 ober- und unterhalb des Vorstreifens 2 sind über einen Schub-Aktuator 6 in der Breitenrichtung des Vorstreifens verfahrbar. Dadurch ist die Breitenposition s_{B}, d.h. der Abstand zwischen einer Seitenkante des Vorstreifens 2 und dem Ende der Spule 5 einstellbar. Zusätzlich dazu kann die Höhenposition s_{H} der Spulen 5 und damit der Abstand zwischen der oberen Spule 5 und der Oberseite sowie der unteren Spule 5 und der Unterseite des Vorstreifens 2 verändert werden. Die Höhenänderung erfolgt durch mehrere Hub-Aktuatoren 7 (siehe auch FIG 7c). Die Stromversorgung 14 eines oder mehrerer Querfeld-Module 3 ist in einem klimatisierten und reinen Elektroraum 20 untergebracht. Die FIG 7c zeigt schematisch einen Schnitt quer zur Transportrichtung R entlang der Linie A-A von FIG 7b mit einem Umrichter 16 zur Erzeugung einer Wechselspannung mit einer bestimmten Frequenz f und einer bestimmten Stromstärke I, einer Kondensatorbank 17 mit mehreren parallel geschalteten Kondensatoren und flexiblen Kabeln 15, hier Koaxialkabeln, zur Verbindung der Kondensatorbank 17 mit den verfahrbaren Spulen 5 auf dem Spulenwagen 19. Die Verbindung zwischen dem in einem Umrichterschrank 16a angeordneten Umrichter 16 und der Kondensatorbank 17 erfolgt über Stromschienen 18. Falls es zu einem Störlichtbogen im Bereich der Stromversorgung 14 kommt, wird der Überdruck im Elektroraum 20 über einen Schacht mit einer Explosionsklappe 21 nach außen abgeleitet. Dadurch wird sichergestellt, dass keine schädlichen Gase oder Dämpfe in den Bereich des Warmwalzwerks kommen. Wie in FIG 7b schematisch dargestellt, verfügt die Stromversorgung 14 über einen Frequenzeingang zur Vorgabe einer Soll-Frequenz f_{Soll}, einen Stromeingang zur Vorgabe einer Soll-Stromstärke I_{Soll}, einen Breiteneingang zur Vorgabe einer Soll-Breitenposition s_{B-Soll} und einen Höheneingang zur Vorgabe einer Soll-Höhenposition s_{H-Soll}. Über diese Eingänge kann ein oder mehrere Querfeld-Module 3 hinsichtlich der Frequenz f und der Stromstärke I der Wechselspannung sowie hinsichtlich der Breitenposition s_{B} und der Höhenposition s_{H} an die aktuellen Produktionsbedingungen angepasst werden. In FIG 7b ist aus Gründen der Übersichtlichkeit nur eine einzige Stromversorgung 14 dargestellt. Es versteht sich von selbst, dass alle Querfeld-Module 3 mit einer Stromversorgung 14 verbunden sind, wobei eine Stromversorgung 14 ein oder mehrere Querfeld-Module 3 versorgen kann. Die Stromversorgung der Längsfeld-Module 4 wurde nicht dargestellt.

Die **Figur 8** zeigt schließlich ein Schema einer Steuer- oder Regeleinrichtung 8, der ständig aktuelle Daten des Produktionsprozesses, wie die Breite b, die Dicke d, die Geschwindigkeit v des Vorstreifens sowie die Temperaturprofile T₁ des Vorstreifens 2 vor dem Eintritt in die Heizungsvorrichtung 1 und nach dem Austritt aus der Heizungsvorrichtung 1 zugeführt werden. Aus diesen Eingangsgrößen berechnet die Steuer- oder Regeleinrichtung 8 die Soll-Frequenz f_{Soll} und die Soll-Stromstärke I_{Soll} für die Stromversorgungen 14 sowie die Soll-Breitenposition s_{B-Soll} und die Soll-Höhenposition s_{H-Soll} für die Spulenwägen 19. Die Soll-Werte sind über die jeweiligen Ausgänge der Steuer- oder Regeleinrichtung 8 mit den Eingängen der Stromversorgung bzw. den Eingängen auf den Querfeld-Modulen signaltechnisch verbunden. Die Steuer- oder Regeleinrichtung 8 kann bspw. eine PLC oder ein Prozessrechner sein. Außerdem ist es möglich, dass die Funktionalität der Steuer- oder Regeleinrichtung 8 von der Anlagensteuerung der Walzanlage übernommen wird.

### Bezugszeichenliste

| | |
|---|---|
| 1 | Heizungsvorrichtung |
| 2 | Flachstahlstreifen, Vorstreifen |
| 3 | Querfeld-Modul |
| 4 | Längsfeld-Modul |
| 5 | Spule |
| 6 | Schub-Aktuator |
| 7 | Hub-Aktuator |
| 8 | Steuer- oder Regeleinrichtung |
| 9 | Gerüst der Vorwalzstraße |
| 10 | Gerüst der Fertigwalzstraße |
| 11 | Thermometer bzw. Pyrometer |
| 12 | Entzunderer |
| 13 | Treibrolle |
| 14 | Stromversorgung |
| 15 | flexibles Kabel |
| 16 | Umrichter |
| 16a | Umrichterschrank |
| 17 | Kondensatorbank |
| 18 | Stromschiene |
| 19 | Spulenwagen |
| 20 | Elektroraum |
| 21 | Explosionsklappe |
| b, b1, b2 | Breite des Flachstahlstreifens |
| d | Dicke des Flachstahlstreifens |
| f, f1, f2, f3, f4 | Frequenz, Ist-Frequenz |
| f_{Soll} | Soll-Frequenz |
| M | Magnetischer Fluss |
| I | Strom, Stromstärke, Ist-Stromstärke |
| I_{Soll} | Soll-Strom |
| R | Transportrichtung |
| s_{B} | Breitenposition der Spule, Ist-Breitenpos. |
| s_{B-Soll} | Soll-Breitenposition der Spule |
| s_{H} | Höhenposition der Spule, Ist-Höhenpos. |
| s_{H-Soll} | Soll-Höhenposition der Spule |
| T₁, T₂ | Temperatur bzw. Temperaturprofil |
| v | Geschwindigkeit des Flachstahlstreifens |
| W | Wirbelstrom |

## Patentansprüche

1. Warmwalzwerk mit einer Heizungsvorrichtung (1) zum induktiven Erhitzen eines Flachstahlstreifens (2) in dem Warmwalzwerk, wobei die Heizungsvorrichtung (1) zwischen zwei Walzstraßen des Warmwalzwerks angeordnet ist und der Flachstahlstreifen (2) die Heizungsvorrichtung (1) in einer Transportrichtung (R) mit einer Geschwindigkeit durchläuft, wobei die Heizungsvorrichtung (1) umfasst:
- eine erste Modulgruppe mit einer Mehrzahl, insbesondere 6 bis 12, von entlang der Transportrichtung (R) des Flachstahlstreifens (2) nacheinander angeordneten Querfeld-Modulen (3),
- eine zweite Modulgruppe mit einer Mehrzahl, insbesondere 2 bis 8, von entlang der Transportrichtung (R) des Flachstahlstreifens (2) nacheinander angeordneten Längsfeld-Modulen (4), wobei die zweite Modulgruppe entlang der Transportrichtung (R) vor oder nach der ersten Modulgruppe angeordnet ist,
- eine Stromversorgung (14) zum Versorgen zumindest eines Querfeld-Moduls (3) oder eines Längsfeld-Moduls (4) mit einer Wechselspannung, wobei die Stromversorgung (14) einen Umrichter (16) und eine elektrisch verbundene Kondensatorbank (17) mit mehreren parallel geschalteten Kondensatoren aufweist, und wobei die Stromversorgung (14) einen Frequenzeingang zur Vorgabe einer Soll-Frequenz (f_{Soll}) umfasst und die Frequenz (f) der Wechselspannung der Soll-Frequenz (f_{Soll}) folgt.

2. Warmwalzwerk mit einer Heizungsvorrichtung (1) nach Anspruch 1, wobei die Stromversorgung einen Stromeingang zur Vorgabe einer Soll-Stromstärke (I_{Soll}) umfasst und die Stromstärke (I) der Wechselspannung der Soll-Stromstärke (I_{Soll}) folgt.

3. Warmwalzwerk mit einer Heizungsvorrichtung (1) nach einem der vorhergehenden Ansprüche mit einem Schub-Aktuator (6) zum Verändern der Breiten-Position (s_{B}) zumindest einer Spule (5) eines Querfeld-Moduls (3).

4. Warmwalzwerk mit einer Heizungsvorrichtung (1) nach Anspruch 3, wobei ein Querfeld-Modul (3) einen Breiteneingang zur Vorgabe einer Soll-Breitenposition (s_{B-Soll}) umfasst und die Breitenposition (s_{B}) einer Spule (5) des Querfeld-Moduls (3) in Breitenrichtung der Soll-Breitenposition (s_{B-Soll}) folgt.

5. Warmwalzwerk mit einer Heizungsvorrichtung (1) nach einem der vorhergehenden Ansprüche mit einem Hub-Aktuator (7) zum Verändern der Höhen-Position (s_{H}) zumindest einer Spule (5) eines Querfeld-Moduls (3).

6. Warmwalzwerk mit einer Heizungsvorrichtung (1) nach Anspruch 5, wobei ein Querfeld-Modul (3) einen Höheneingang zur Vorgabe einer Soll-Höhenposition (s_{H-soll}) umfasst und die Höhenposition (s_{H}) einer Spule (5) eines Querfeld-Moduls (3) in Dickenrichtung der Soll-Höhenposition (s_{H-Soll}) folgt.

7. Warmwalzwerk mit einer Heizungsvorrichtung (1) nach einem der vorhergehenden Ansprüche mit einer Steuer- oder Regeleinrichtung (8),
wobei die Steuer- oder Regeleinrichtung (8)
- einen Stromausgang zur Vorgabe einer Soll-Stromstärke (I_{Soll}) eines Querfeld-Moduls (3) und/oder einen Frequenzausgang zur Vorgabe einer Soll-Frequenz (f_{Soll}) eines Querfeld-Moduls (3),
- einen Breitenausgang zur Vorgabe einer Soll-Breitenposition (s_{B-Soll}) in der Breitenrichtung einer Spule (5) eines Querfeld-Moduls (3) und/oder einen Höhenausgang zur Vorgabe einer Soll-Höhenposition (s_{H-Soll}) in der Dickenrichtung einer Spule (5) eines Querfeld-Moduls (3)
umfasst,
wobei die Soll-Stromstärke (I_{Soll}), die Soll-Frequenz (f_{Soll}), die Soll-Breitenposition (s_{B-Soll}) und die Soll-Höhenposition (s_{H-Soll}) in Abhängigkeit wenigstens eines Parameters des Flachstahlstreifens (2) aus der Gruppe der Dicke (d), der Breite (b), der Geschwindigkeit (v), der Temperatur (T₁) vor dem Eintritt in die Heizungsvorrichtung (1), und der Temperatur (T₂) nach dem Austritt aus der Heizungsvorrichtung (1) eingestellt wird.

8. Verfahren zum induktiven Erhitzen eines Flachstahlstreifens (2) in einem Warmwalzwerk mittels einer Heizungsvorrichtung (1) nach einem der vorhergehenden Ansprüche, wobei die Heizungsvorrichtung (1) zwischen zwei Walzstraßen des Warmwalzwerks angeordnet ist und der Flachstahlstreifen (2) die Heizungsvorrichtung (1) in einer Transportrichtung (R) mit einer Geschwindigkeit durchläuft, aufweisend die Verfahrensschritte:
- Erhitzen des Flachstahlstreifens (2) durch eine erste Modulgruppe mit einer Mehrzahl, insbesondere 6 bis 12, von entlang der Transportrichtung (R) nacheinander angeordneter Querfeld-Module (3),
- wobei ein Querfeld-Modul (3) mit einer Wechselspannung mit einer Frequenz (f, f1, f2) betrieben wird und die Frequenz (f, f1, f2) während einer Walzkampagne oder zwischen zwei Walzkampagnen verändert wird, und wobei die Frequenz (f, f1, f2) in Abhängigkeit der Dicke (d) des Flachstahlstreifens (2) eingestellt wird, und
- Erhitzen des Flachstahlstreifens (2) durch eine zweite Modulgruppe mit einer Mehrzahl, insbesondere 2 bis 8, von entlang der Transportrichtung (R) nacheinander angeordneter Längsfeld-Module (4), wobei die zweite Modulgruppe entlang der Transportrichtung (R) vor oder nach der ersten Modulgruppe angeordnet ist.

9. Verfahren (1) nach Anspruch 8, wobei ein Querfeld-Modul (3) mit einer Stromstärke (I) betrieben wird und die Stromstärke (I) in Abhängigkeit wenigstens eines Parameters des Flachstahlstreifens (2) aus der Gruppe der Dicke (d), der Geschwindigkeit (v), der Temperatur vor dem Eintritt in die Heizungsvorrichtung (1), und der Temperatur nach dem Austritt aus der Heizungsvorrichtung (1) eingestellt wird.

10. Verfahren (1) nach einem der Ansprüche 8 bis 9, wobei zumindest eine Spule (5) eines Querfeld-Moduls (3) in der Breitenrichtung auf eine Breitenposition (s_{B}) verfahren wird und die Breitenposition (s_{B}) in Abhängigkeit der Breite (b1, b2) und/oder eines Temperaturprofils des Flachstahlstreifens (2) eingestellt wird.

11. Verfahren nach einem der Ansprüche 8 bis 10, wobei zumindest eine Spule (5) eines Querfeld-Moduls (3) in der Dickenrichtung auf eine Höhenposition (s_{H}) verfahren wird und die Höhenposition (s_{H}) in Abhängigkeit der Dicke (d) des Flachstahlstreifens (2) eingestellt wird.

## Claims

1. Hot rolling mill with a heating device (1) for the inductive heating of a flat steel strip (2) in the hot rolling mill, wherein the heating device (1) is arranged between two rolling trains of the hot rolling mill and the flat steel strip (2) runs at a speed through the heating device (1) in a transporting direction (R), wherein the heating device (1) comprises:
- a first module group with a plurality of, in particular 6 to 12, transverse-field modules (3), which are arranged one after the other along the transporting direction (R) of the flat steel strip (2),
- a second module group with a plurality of, in particular 2 to 8, longitudinal-field modules (4), which are arranged one after the other along the transporting direction (R) of the flat steel strip (2), wherein the second module group is arranged before or after the first module group along the transporting direction (R),
- a power supply (14) for supplying at least one transverse-field module (3) or one longitudinal-field module (4) with an alternating voltage, wherein the power supply (14) has a converter (16) and an electrically connected capacitor bank (17) with multiple capacitors connected in parallel, and wherein the power supply (14) comprises a frequency input for determining a setpoint frequency (f_{Soll}) and the frequency (f) of the alternating voltage follows the setpoint frequency (f_{Soll}).

2. Hot rolling mill with a heating device (1) according to Claim 1, wherein the power supply comprises a current input for determining a setpoint current intensity (I_{Soll}) and the current intensity (I) of the alternating voltage follows the setpoint current intensity (I_{Soll}).

3. Hot rolling mill with a heating device (1) according to one of the preceding claims with a thrust actuator (6) for changing the width position (s_{B}) of at least one coil (5) of a transverse-field module (3).

4. Hot rolling mill with a heating device (1) according to Claim 3, wherein a transverse-field module (3) comprises a width input for determining a setpoint width position (s_{B-Soll}) and the width position (s_{B}) of a coil (5) of the transverse-field module (3) in the direction of the width follows the setpoint width position (s_{B-Soll}).

5. Hot rolling mill with a heating device (1) according to one of the preceding claims with a lift actuator (7) for changing the height position (s_{H}) of at least one coil (5) of a transverse-field module (3).

6. Hot rolling mill with a heating device (1) according to Claim 5, wherein a transverse-field module (3) comprises a height input for determining a setpoint height position (s_{H-Soll}) and the height position (s_{H}) of a coil (5) of a transverse-field module (3) in the direction of the thickness follows the setpoint height position (s_{H-Soll}).

7. Hot rolling mill with a heating device (1) according to one of the preceding claims with an open-loop or closed-loop control device (8),
wherein the open-loop or closed-loop control device (8) comprises
- a current output for determining a setpoint current intensity (I_{Soll}) of a transverse-field module (3) and/or a frequency output for determining a setpoint frequency (f_{Soll}) of a transverse-field module (3),
- a width output for determining a setpoint width position (s_{B-Soll}) in the direction of the width of a coil (5) of a transverse-field module (3) and/or a height output for determining a setpoint height position (s_{H-Soll}) in the direction of the thickness of a coil (5) of a transverse-field module (3),
wherein the setpoint current intensity (I_{Soll}), the setpoint frequency (f_{Soll}), the setpoint width position (s_{B-Soll}) and the setpoint height position (s_{H-Soll}) are set in dependence on at least one parameter of the flat steel strip (2) from the group comprising the thickness (d), the width (b), the speed (v), the temperature (T_{g}) before entering the heating device (1), and the temperature (T₂) after leaving the heating device (1).

8. Method for the inductive heating of a flat steel strip (2) in a hot rolling mill by means of a heating device (1) according to one of the preceding claims, wherein the heating device (1) is arranged between two rolling trains of the hot rolling mill and the flat steel strip (2) runs at a speed through the heating device (1) in a transporting direction (R), comprising the method steps of:
- heating the flat steel strip (2) by a first module group with a plurality of, in particular 6 to 12, transverse-field modules (3), which are arranged one after the other along the transporting direction (R),
- wherein a transverse-field module (3) is operated with an alternating voltage with a frequency (f, f1, f2) and the frequency (f, f1, f2) is changed during a rolling campaign or between two rolling campaigns, and wherein the frequency (f, f1, f2) is set in dependence on the thickness (d) of the flat steel strip (2), and
- heating the flat steel strip (2) by a second module group with a plurality of, in particular 2 to 8, longitudinal-field modules (4), which are arranged one after the other along the transporting direction (R), wherein the second module group is arranged before or after the first module group along the transporting direction (R).

9. Method (1) according to Claim 8, wherein a transverse-field module (3) is operated with a current intensity (I) and the current intensity (I) is set in dependence on at least one parameter of the flat steel strip (2) from the group comprising the thickness (d), the speed (v), the temperature before entering the heating device (1), and the temperature after leaving the heating device (1).

10. Method (1) according to either of Claims 8 and 9, wherein at least one coil (5) of a transverse-field module (3) is moved in the width direction to a width position (s_{B}) and the width position (s_{B}) is set in dependence on the width (b1, b2) and/or a temperature profile of the flat steel strip (2).

11. Method according to one of Claims 8 to 10, wherein at least one coil (5) of a transverse-field module (3) is moved in the thickness direction to a height position (s_{H}) and the height position (s_{H}) is set in dependence on the thickness (d) of the flat steel strip (2).

## Revendications

1. Laminoir à chaud comprenant un dispositif de chauffage (1) permettant de chauffer par induction une bande d'acier plat (2) dans le laminoir à chaud, dans lequel le dispositif de chauffage (1) est agencé entre deux trains de laminage du laminoir à chaud et la bande d'acier plat (2) traverse le dispositif de chauffage (1) dans une direction de transport (R) à une certaine vitesse, dans lequel le dispositif de chauffage (1) comprend :
- un premier groupe de modules comprenant une pluralité de modules à champ transversal (3), en particulier entre 6 et 12 modules, agencés de manière successive le long de la direction de transport (R) de la bande d'acier plat (2),
- un second groupe de modules comprenant une pluralité de modules à champ longitudinal (4), en particulier entre 2 et 8 modules, agencés de manière successive le long de la direction de transport (R) de la bande d'acier plat (2), dans lequel le second groupe de modules est agencé le long de la direction de transport (R) avant ou après le premier groupe de modules,
- une alimentation électrique (14) permettant d'alimenter au moins un module à champ transversal (3) ou un module à champ longitudinal (4) avec une tension alternative, dans lequel l'alimentation électrique (14) présente un convertisseur (16) et un banc de condensateurs (17) électriquement relié à plusieurs condensateurs commutés en parallèle, et dans lequel l'alimentation électrique (14) comprend une entrée de fréquence permettant de spécifier une fréquence de consigne (f_{Soll}) et la fréquence (f) de la tension alternative suit la fréquence de consigne (f_{Soll}).

2. Laminoir à chaud comprenant un dispositif de chauffage (1) selon la revendication 1, dans lequel l'alimentation électrique comprend une entrée de courant permettant de spécifier une intensité de courant de consigne (I_{Soll}) et l'intensité de courant (I) de la tension alternative suit l'intensité de courant de consigne (I_{Soll}).

3. Laminoir à chaud comprenant un dispositif de chauffage (1) selon l'une quelconque des revendications précédentes, avec un actionneur de poussée (6) permettant de modifier la position de largeur (S_{B}) d'au moins une bobine (5) d'un module à champ transversal (3).

4. Laminoir à chaud comprenant un dispositif de chauffage (1) selon la revendication 3, dans lequel un module à champ transversal (3) comprend une entrée de largeur permettant de spécifier une position de largeur de consigne (S_{B-Soll}) et la position de largeur (S_{B}) d'une bobine (5) du module à champ transversal (3) dans le sens de la largeur suit la position de largeur de consigne (S_{B-Soll}).

5. Laminoir à chaud comprenant un dispositif de chauffage (1) selon l'une quelconque des revendications précédentes avec un actionneur de levage (7) permettant de modifier la position de hauteur (S_{H}) d'au moins une bobine (5) d'un module à champ transversal (3).

6. Laminoir à chaud comprenant un dispositif de chauffage (1) selon la revendication 5, dans lequel un module à champ transversal (3) comprend une entrée de hauteur permettant de spécifier une position de hauteur de consigne (S_{H-Soll}) et la position de hauteur (S_{H}) d'une bobine (5) d'un module à champ transversal (3) dans le sens de l'épaisseur suit la position de hauteur de consigne (S_{H-Soll})

7. Laminoir à chaud comprenant un dispositif de chauffage (1) selon l'une quelconque des revendications précédentes avec un dispositif de commande ou de régulation (8),
dans lequel le dispositif de commande ou de régulation (8) comprend :
- une sortie de courant permettant de spécifier une intensité de courant de consigne (I_{Soll}) d'un module à champ transversal (3) et/ou une sortie de fréquence permettant de spécifier une fréquence de consigne (f_{Soll}) d'un module à champ transversal (3),
- une sortie de largeur permettant de spécifier une position de largeur de consigne (S_{B-Soll}) dans le sens de la largeur d'une bobine (5) d'un module à champ transversal (3) et/ou une sortie de hauteur permettant de spécifier une position de hauteur de consigne (S_{H-Soll}) dans le sens de l'épaisseur d'une bobine (5) d'un module à champ transversal (3),
dans lequel l'intensité de courant de consigne (I_{Soll}), la fréquence de consigne (f_{Soll})_{,} la position de largeur de consigne (S_{B-Soll}) et la position de hauteur de consigne (S_{H-Soll}) sont ajustées en fonction d'au moins un paramètre de la bande d'acier plat (2) sélectionné parmi le groupe comprenant l'épaisseur (d), la largeur (b), la vitesse (v), la température (T₁) avant l'entrée dans le dispositif de chauffage (1) et la température (T₂) après la sortie du dispositif de chauffage (1).

8. Procédé permettant de chauffer par induction une bande d'acier plat (2) dans un laminoir à chaud au moyen d'un dispositif de chauffage (1) selon l'une quelconque des revendications précédentes, dans lequel le dispositif de chauffage (1) est agencé entre deux trains de laminage du laminoir à chaud et la bande d'acier plat (2) traverse le dispositif de chauffage (1) dans une direction de transport (R) à une certaine vitesse, comprenant les étapes de procédé consistant à :
- chauffer la bande d'acier plat (2) grâce à un premier groupe de modules comprenant une pluralité de modules à champ transversal (3), en particulier entre 6 et 12 modules, agencés de manière successive le long de la direction de transport (R),
- dans lequel un module à champ transversal (3) est utilisé avec une tension alternative présentant une fréquence (f, f1, f2) et la fréquence (f, f1, f2) est modifiée pendant une campagne de laminage ou entre deux campagnes de laminage, et dans lequel la fréquence (f, f1, f2) est ajustée en fonction de l'épaisseur (d) de la bande d'acier plat (2), et
- chauffer la bande d'acier plat (2) grâce à un second groupe de modules comprenant une pluralité de modules à champ longitudinal (4), en particulier entre 2 et 8 modules, agencés de manière successive le long de la direction de transport (R), dans lequel le second groupe de modules est agencé le long de la direction de transport (R) avant ou après le premier groupe de modules.

9. Procédé (1) selon la revendication 8, dans lequel un module à champ transversal (3) est utilisé avec une certaine intensité de courant (I) et l'intensité de courant (I) est ajustée en fonction d'au moins un paramètre de la bande d'acier plat (2) sélectionné parmi le groupe comprenant l'épaisseur (d), la vitesse (v), la température avant l'entrée dans le dispositif de chauffage (1) et la température après la sortie du dispositif de chauffage (1).

10. Procédé (1) selon l'une quelconque des revendications 8 à 9, dans lequel au moins une bobine (5) d'un module à champ transversal (3) est déplacée dans le sens de la largeur jusqu'à une position de largeur (S_{B}) et la position de largeur (S_{B}) est ajustée en fonction de la largeur (b1, b2) et/ou d'un profil de température de la bande d'acier plat (2).

11. Procédé selon l'une quelconque des revendications 8 à 10, dans lequel au moins une bobine (5) d'un module à champ transversal (3) est déplacée dans le sens de l'épaisseur jusqu'à une position de hauteur (S_{H}) et la position de hauteur (S_{H}) est ajustée en fonction de l'épaisseur (d) de la bande d'acier plat (2).
